# EUROPEAN PATENT APPLICATION

(11) **EP 2 650 558 A1**
(43) Date of publication of application: **16.10.2013**
(21) Application number: 13001844.3
(22) Date of filing: 10.04.2013
(51) Int. Cl.: F16F 7/12, E01F 7/04

(54) **Energy dissipation device for protecting structures or the like**

(30) Priority: 12.04.2012 IT MI20120597
(71) Applicant: Geoprotection S.r.l., 33028 Tolmezzo (UD) (IT)
(72) Inventor: Orgnoni, Paolo, I - 33028 Tolmezzo (UD) (IT)
(74) Representative: Marietti, Andrea

(57) **Abstract**

It is described an energy dissipation device (1) for the use in structures for restraining masses or bodies subjected to stresses by static and/or dynamic forces comprising at least one deformable body (2) provided with at least one hollow (3) and deforming means (10) for deforming the body section at the at least one hollow it is provided with. The deforming means (10) and/or the deformable body (2) are movable one relatively to each other when the structure is subjected to stresses.

## Description

The present invention relates to an energy dissipation device used for limiting and dampening the stresses generated upon impacts or overloads, and in general upon the application of static and/or dynamic loads. More in detail, the dissipation device according to the present invention is preferably used in protective structures such as for example, nets, barriers and the like for restraining masses or bodies, which are subjected to stresses such as impacts or overloads as a consequence of the contact for example with rocks, avalanches, vehicles and the like.

The dissipation devices are used in the protective structures of the above mentioned type for limiting the effects of the stresses generated on the structure, and in particular on cables composing the same and/or allowing the constraint thereof to the ground or to an anchor, as a consequence of the force applied for example by boulders falling from a rocky slope, or an avalanche.

The sudden impacts and overloads, and in general the application of forces as a consequence of falling of rocks, snow or bodies against the protective nets or barriers generate a high amount of energy which has to be dissipated through these devices. The energy dissipation devices currently employed are constrained to anchoring cables of the protective structures such that, as a consequence of the impact of falling bodies against the structure or otherwise of the overloads exerted by bodies the structure is intended to restrain, stresses and forces transmitted to the anchoring cables of the structure itself, and therefore to the latter, can be absorbed and thus reduced. This way it is possible to avoid that the structure and the anchoring cables are excessively stressed with the risk of possible ruptures or damages to the structure, which would cause a reduction of the efficacy of the action of protecting and restraining the falling bodies. For the energy dissipation, it is known to use the deformation of one or more coils of a tube wherein a cable of the protective structure is passed, as described in the European patent EP0494046. The device described therein comprises a tubular winding of one or more coils through which a cable of the protective structure passes, and in particular an anchoring cable of the structure. The ends of the tubular winding are strictly retained in mutual contact within a clamping sleeve.

When the rope is subjected to tensile stresses, the energy is dissipated by the permanent deformation of the tubular winding. In practice such a deformation results in a reduction of the diameter of the winding coil.

The dissipation devices of the above described type are particularly complicated to make and implement, in fact they require the implementation of the winded tubular structure inside which the structure cable has to be passed. Further, it has to be noted that the correct operation of such a type of devices and the energy dissipation efficacy is related to the deformation of the winding coil, and thus to the correct retaining of the cable in winded position also upon the application of high intensity forces.

Object of the present invention is to realize a dissipation device for protective structures such as for example protective barriers and/or nets, which is able to absorb and dissipate energy with higher efficacy with respect to the devices known in the art.

Another object of the present invention is to implement a device of the above mentioned type which can be produced with reduced costs and which can be easily installed.

These and other objects are obtained by the device for dissipating energy, according to the present invention, to be used in structures for restraining masses or bodies subjected to stresses by static and/or dynamic forces. The device is characterized by comprising at least one deformable body comprising at least one hollow and means for deforming the section of the deformable body in correspondence to the at least one hollow the deformable body is provided with. The deforming means and/or the deformable body are movable one relatively to each other when the structure is subjected to stresses. According to an aspect of the present invention, the deforming means reduce the section and/or modify the shape of the section of the deformable body, and preferably the deformation the deformable body is subjected to is of permanent type. According to an aspect of the present invention the body deformation occurs by compression and/or elongation.

Advantageously, when the structure the device is constrained to is subjected to stresses, the relative movement of the deformable body with respect to the deforming means, causes the deformation of the section of the deformable body at the hollow thereof with resulting energy absorption and dissipation.

Preferably the deforming means encircle at least partly one portion of the deformable body, so that the relative movement therebetween, determined by the stresses acting on the structure, determines the deformation of the deformable body itself at least at its own hollow.

According to a possible embodiment, the deforming means of the deformable body section comprise at least one passage seat for such a deformable body. Preferably the passage seat the deforming means are provided with has sizes smaller at least than the hollow section of the deformable body. Therefore, the forced transition through said seat, as a consequence of stresses the structure transmits to the device, allows to cause the deformation of the section of the deformable body, preferably at least at its own hollow. According to a possible embodiment, the passage seat of the deforming means the deformable body is intended to pass through comprises at least two parallel sides. According to an aspect of the present invention, the deforming means comprise a main element and a removable portion which can be constrained to the main element such a way the removable portion is fixed or movable with respect thereto.

Substantially, according to a particular aspect of the invention, the deforming means, of which the above described device is provided, form a drawing die, which allows to obtain the extrusion of the deformable body, that is to say a reduction and/or modification of the section of the deformable body, at least at a hollow portion thereof. It has to be noted that with the term "drawing die" is meant an object provided with at least one seat at least partly encircling the deformable body to cause the deformation of the section thereof, in correspondence to the hollow the deformable body is provided with.

According to an aspect of the present invention, the deformable body provided with at least one hollow, which is subjected to deformation for dissipating energy, has substantially elongated shape and has, preferably, a constant section. Such a shape, and in particular the presence of a constant section, allows to obtain a deformation of the relevant section, and thus the resultant energy dissipation, that is substantially uniform. According to a preferred embodiment, the deformable body has tubular shape, thus provided with a cylindrical hollow extending preferably throughout its length.

It has to be noted that the at least one hollow the deformable body is provided with, can be preferably filled, at least partly, with material having compression strength lower than the compression strength of the material the deformable body is made of. Such filling materials comprise for example synthetic, polymeric material foams and the like. The presence of such a filling material allows to modify the behavior of the deformable body during its deformation; in fact, depending on the type and the characteristics of the filling material, the deformation of the deformable body and thus the energy dissipation will be different and could be adjusted during the manufacturing step of the device, by modifying the features of the material used to fill up the hollow of the deformable body itself.

It is evident that the dissipation device according to the present invention is very easy to manufacture; in fact it consists of two elements, that is to say the deformable body and the deforming means, which can be therefore easily carried out and constrained to the protecting structure.

At the same time, the device according to the present invention allows to effectively dissipate the energy transmitted from the structure subjected to stresses to which it is constrained, by the deformation of the section of a deformable body in correspondence to the hollow it is provided with.

These and other advantages will be evident from the following description and the figures in attachment, herein reported for illustrative and not limitative purposes, wherein:

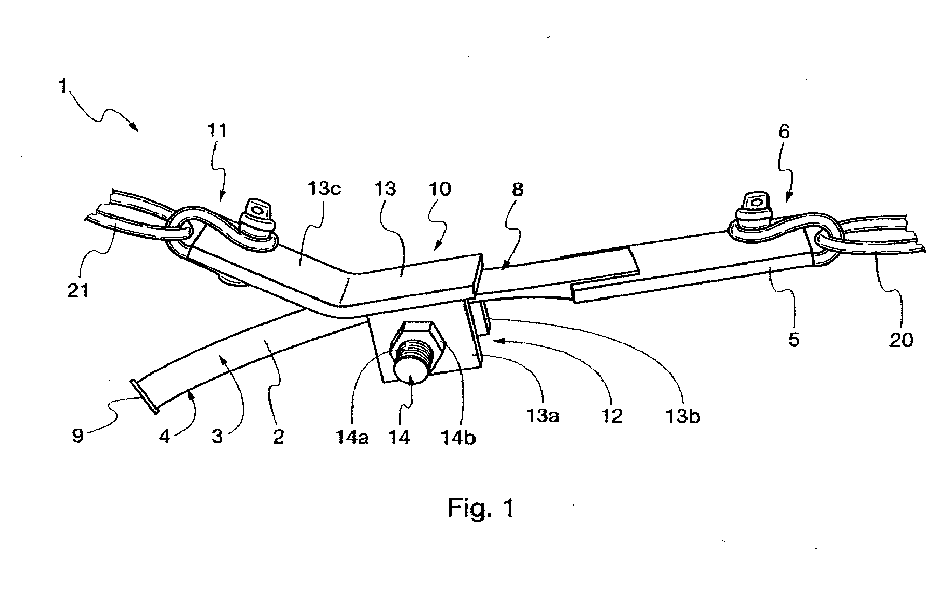

- figure 1 shows a perspective view of the dissipation device according to the present invention;

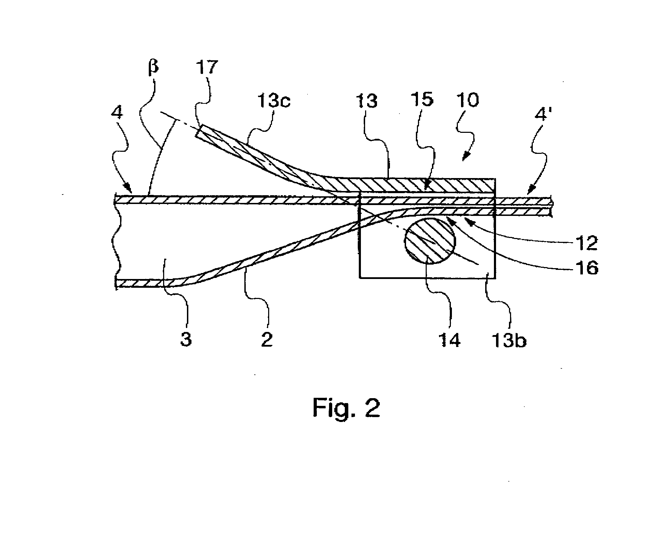

- figure 2 is an enlarged side section of the deforming means of the section of the deformable body of the dissipation device according to the present invention. Referring to the attached figures 1 and 2, the energy dissipation device 1 for the use in protective structures for restraining masses and bodies subjected to stresses such as dynamic and/or static loads, according to the present invention, comprises a deformable body 2, provided with at least one hollow 3, and deforming means 10 for deforming the section 4 of the body 2.

As stated above, the device according to the present invention is preferably used in protective or restraining structures of loosened bodies, such as for example nets or barriers against the falling of rocks or avalanches and the like, which are subjected to stresses due to the shock, impact, or load of falling bodies against the protective structure, or part thereof.

More in detail, the deformable body 2 or the deforming means 10 for deforming the same are constrained to the structure subjected to stresses, and in the event of falling of rocks, avalanches or bodies contacting the structure, the stresses are transmitted to the dissipation device 1 connected thereto.

As visible in figure 1, the deformable body 2 is constrained to a cable 20 of the structure and preferably to a cable departing from the structure itself, whereas the deforming means 10 for deforming the deformable body 2 are constrained to an anchor, conveniently prearranged by the cable 21, or vice versa. In this regard, an end portion 5 of the deformable body 2 comprises means 6 for connecting to the structure or to an anchor, such as for example a seat adapted to the constraint of rings and like connecting means known for such an use. Similarly, the deforming means 10 are provided with at least one element 11 for connecting to the structure or to an anchor, for example a seat adapted to the connection with the cable 21 by rings, and the like.

According to further possible uses, the device can be constrained between a bracing rope of the protective structure and a ground anchor, or between the bracing rope and the structure itself.

Furthermore, a safety rope, not shown in the accompanying figures, can be constrained respectively to the deformable body 2 and to the deforming means 10 through the connecting means 6 and 11. By doing so it is possible to avoid that, in case of excessive overload, the deformable body 2 can split up from the deforming means 10 as a consequence of its whole deformation.

In any case, it has to be noted that whichever the constraint mode of the device 1 to the protective structure is, the relative movement of the deformable body 2 and the means 10 for deforming the section thereof has to be assured, at least when the structure is subjected to stresses and these are transmitted to the device.

As mentioned, the dissipation device according to the present invention causes the impacts absorption by the deformation of the section 4 of the deformable body 2 in correspondence to the at least one hollow 3 of which it is provided with.

More in detail, the deforming means 10 for deforming the section of the deformable body cause, preferably, the reduction of the section 4 and/or a shape modification of the section 4 next to at least part of the hollow 3 the deformable body 2 is provided with. It has to be noted that the reduction of the section 4 of the deformable body 2 occurs, preferably, without chip removal from the surface. The modification of the section shape occurs for example by compression of the section 4 at the hollow 3, and a deformation by elongation of the body 2 is possible as well.

As it will be better seen in the following, the deformation the deformable body is subjected to is preferably of the permanent type, it is however possible to envisage other deformation types, for example with an elastic component, or with mainly elastic deformation.

According to an aspect of the present invention, the deforming means 10 encircle at least partly the deformable body 2 so that the movement of one relatively to each other, due to the stresses the structure is subjected to, which are transmitted to the device, allow to cause the reduction or the modification of the section 4, thus determining the energy dissipation.

Substantially, the action of the deforming means 10 to the deformable body can be compared to the action of a drawing die inside which the deformable body 2 is forced to pass by the stresses the structure transmit to the device. It has to be noted that with the term drawing die it is meant a body provided with at least one seat encircling at least partly the deformable body and, as a consequence of the movement of the deformable body inside the drawing die, causing the reduction or the modification of the shape of the section thereof.

As better visible in the sectional view of figure 2, the deforming means 10 comprise a passage seat 12 for the deformable body 2, within which the latter is forced to transit causing the permanent deformation of its section and the resultant energy absorption.

The deformable body 2 is preferably an elongated body having a preferably constant section. The constant section allows to obtain, upon contacting with the deforming means 10, an energy dissipation that is substantially uniform, due to the fact that the deformation undergone by the section 4 of the deformable body 2 will be nearly constant. Of course, according to possible embodiments, the deformable body 2 can be provided with variable section, accordingly determining a variable dissipation of energy.

In the embodiment shown in figures, the deformable body 2 has a tubular shape with a circular section, having an inner cylindrical hollow 3 which can be thus deformed throughout its length. Of course, other shapes of the section of the tubular body can be used, such as for example the quadrangular shape.

Note that the type of deformation of the section 4 of the deformable body 2 also depends on the type of material it is made of. Preferably, the deformable body is made of metallic material, for example high strength metals, such as steel S460, and provided with high elastic limit. Furthermore, the hollow 3 of the deformable body can be filled with a material provided with compression strength lower than the material composing the deformable body. According to some possible embodiments, the filling materials of the hollow 3 of the deformable body comprise synthetic material foams, for example polymeric foams or metallic foams. Of course, the presence of such a material placed within the hollow 3 of the deformable body 2 affects as well the behavior it has against the deformation and accordingly it also affects the energy dissipation that can be obtained by the deformation.

The deforming means 10 for deforming the section of the body 2, in the embodiment of the accompanying figures, comprise a main element 13 and a removable portion 14. The removable portion 14 can be constrained to the main element 13, both in a fixed way and in a movable way. In the embodiment shown in the figures, the main element is made of a plate 13 of metallic material provided with two side flanges 13a and 13b, preferably made of high strength steel, whereas the removable portion 14 comprises a bolt, made of high strength steel too.

It has to be noted that the plate 13 comprises an end portion 13c sloped according to a bending angle β comprised in the range 25° - 40° (see figure 2). Such a shape allows assuring the correct application of the tensile stresses. In particular, as visible in figure 2, the axis 17 along which the tensile stresses are transmitted passes through the center of the removable portion 14.

Note that the bolt 14 can be easily installed and removed from the main element 13 of the deforming means 10 to allow the installation of the deformable body 2, and in particular to allow the transition of at least part of the deformable body within the passage seat 12 when the device is installed. In fact, the bolt 14, formed by screw 14a and nut 14b, is constrained in proper seats arranged on the two side flanges 13a and 13b of the plate 13. As said, the bolt 14 can be constrained so that to be rotatable when installed in the seats of the flanges 13a and 13b of the deforming means 10; in that case, when the deformable body 2 will move within the passage seat 12 of the deforming means 10, the rotation of the bolt 14 will aid the deformation of the section 4 of the deformable body 2, and thus the energy dissipation.

As visible in figures, and in particular in the side sectional view of figure 2, the passage seat 12 for the deformable body 2 is defined by the main element 13 and the removable portion 14, and in particular by the plate 13 and the bolt 14 which is constrained to the side flanges 13a and 13b.

Of course, other embodiments for the main element 13 and the removable portion 14 of the deforming means 10 can be used. For example a movable pin, or a screw, which can be constrained to the previously mentioned main element 13 of the deforming means 10, can replace the bolt 14.

In the embodiment illustrated in the figures, the passage seat 12 has two parallel sides, which are composed of the inner surface 15 of the plate 13, and the upper surface 16 of the body of the bolt 14 constrained to the plate 13. Furthermore, it has to be noted that the passage seat 12 of the deforming means 10 can be realized according to shapes different from the shape described and illustrated in figures.

In addition, it has to be noted that according to a possible embodiment, the deformable body 2 comprises a pre-deformed portion 8 (see figure 1) which allows the passage inside the means 10 for the deformation thereof, and in particular in the passage seat 12 when the device is installed and when there are no stresses in the structure on which the device is constrained.

For example, if the hollow deformable body 2 has a quadrangular section, the two vertical sides can be pre-deformed so as to be bent towards the inside of the body, allowing the deformation as a consequence of the modification of the section height. Alternatively, the pre-deformed portion 8 can be replaced equivalently by a portion of the deformable body 2 having such a section to allow the positioning thereof within the deforming means 10, and in particular in the passage seat 12 they are provided with, when the device is installed.

The movement of the deformable body 2 with respect to the plate 13, or vice versa, when the structure is stressed, for example as a consequence of the falling of rocks against the protective structure, causes the passage of the deformable body 2 inside the passage seat and in particular between the plate 13 and the bolt 14, causing the deformation of its section 4.

In detail, in the embodiment illustrated in the figures, in the event of stresses, the hollow deformable tube 2 having a circular section 4 is forced to pass between the plate 13 and the bolt 14 which, as mentioned, are a passage seat 12 with parallel sides. Therefore, the circular section 4 of the tube 2 is permanently deformed and the resulting section 4' is substantially compressed, as better visible in the right portion, downstream of the deforming means 10, in the sectional view of figure 2.

In fact, the portion of the deformable body 2 placed on the right of the deforming means 10 and the plate 13 and the bolt 14 is substantially deformed, in fact the section 4' of the body 2 seems clearly compressed, as a consequence of the forced transition through the deforming means 10, with the following energy dissipation.

According to a possible embodiment, at the end of the deformable body 2 there are limit means 9, which prevent the deformable body from sliding out from the deforming means 10, as a consequence of the deformation throughout its length.

Of course, the protective structure, for example a rockfall net, can be provided with several dissipation devices according to the present invention, to assure the effective energy dissipation. Furthermore, note that several deforming means 10 can be provided acting on the same deformable body, in order to obtain a more effective energy dissipation. For example, two deforming means 10 can be provided acting on the same deformable body 2 as a consequence of the displacement of the latter in two opposite sliding ways.

## Claims

1. Energy dissipation device (1) for the use in structures for restraining masses or bodies subjected to stresses by static and/or dynamic forces **characterized by** comprising at least one deformable body (2) comprising at least one hollow (3) and deforming means (10) for deforming the section (4) of said body (2) at said at least one hollow (3), said deforming means (10) and/or said deformable body (2) being movable one relatively to each other when said structure is subjected to stresses.

2. Device according to claim 1, wherein said deforming means (10) for deforming said at least one body reduce the section and/or modify the shape of the section (4) of said deformable body (2), at least at said at least one hollow (3).

3. Device according to claim 1 or 2, wherein the deformation said at least one deformable body (2) is subjected to, is a permanent deformation.

4. Device according to any one of the preceding claims wherein said deforming means (10) for deforming said body comprise a main element (13) and a removable portion (14).

5. Device according to claim 4, wherein said removable portion (14) is constrained in such a way to be fixed or movable with respect to said main element (13).

6. Device according to any one of the preceding claims wherein said deforming means (10) for deforming said body comprise at least one passage seat (12) for said deformable body (2).

7. Device according to claim 6, wherein said at least one passage seat (12) comprises at least two parallel sides.

8. Device according to any one of the preceding claims, wherein said deforming means (10) for deforming said deformable body (2) form a drawing die.

9. Device according to any one of the preceding claims, **characterized in that** said at least one deformable body (2) is substantially elongate and it has constant section (4).

10. Device according to any one of the preceding claims, wherein said at least one hollow (3) of said deformable body (2) is filled at least partly with material having a compression strength lower than the compression strength of the material of which the deformable body (2) is made.

11. Device according to any one of the preceding claims, **characterized in that** said at least one deformable body (2) comprises at least one pre-deformed portion (8).
